# EUROPEAN PATENT SPECIFICATION

(11) **EP 3 342 711 B1**
(45) Date of publication and mention of the grant of the patent: **26.01.2022**
(21) Application number: 17208462.6
(22) Date of filing: 19.12.2017
(51) Int. Cl.: B64D 15/12, B64D 15/16

(54) **COMBINED ELECTRO-THERMAL AND PNEUMATIC BOOT DEICING SYSTEM**
KOMBINIERTES ELEKTROTHERMISCHES UND PNEUMATISCHES GUMMIMATTEN-ENTEISUNGSSYSTEM
SYSTÈME DE DÉGIVRAGE DE CHAUSSURE PNEUMATIQUE ET ÉLECTROTHERMIQUE COMBINÉ

(30) Priority: 29.12.2016 US 201615394197
(43) Date of publication of application: 04.07.2018
(73) Proprietor: Goodrich Corporation, Charlotte, NC 28217-4578 (US)
(72) Inventor: CHAUDHRY, Zaffir A., South Glastonbury, CT Connecticut 06073 (US); ZHAO, Wenping, Glastonbury, CT Connecticut 06033 (US); BOTURA, Galdemir Cezar, Copley, OH Ohio 44321 (US); WILSON, Tommy M., Cuyahoga Falls, OH Ohio 44223 (US); HARTZLER, Brad, Doylestown, OH 44230 (US)
(74) Representative: Dehns

(56) References cited:
- EP-A1- 3 098 168
- US-A- 5 921 502
- US-A1- 2008 170 982
- US-A1- 2012 091 276
- US-B1- 6 283 411

## Description

### BACKGROUND

An aircraft moving through the air or clouds is subjected to ice formation, and anti-icing or deicing devices must be used to remove or prevent ice from accumulating on exterior surfaces of the aircraft. One method of deicing is mechanical deicing, and includes the use of a pneumatic boot with inflatable tubes on a leading edge surface. The tubes inflate and deflate in order to break the adhesion of ice on the surface, exposing the cracked ice particles to the aerodynamic flow, and shedding accumulated ice and snow. Another method of deicing is electro-thermal deicing, and includes the use of a heating element placed near or embedded within the leading edge to heat the interface area and melt snow and ice on the surface.

Each deicing method, however, has limited effectiveness. Mechanical deicing means may leave residual ice on the protected leading edge surface. Electro-thermal deicing means are limited by the aircraft's power supply, and in some applications, by the undesirable effect of runback ice. Finally, mechanical and electro-thermal deicing means are often used exclusively of one another, further limiting the deicing ability at a leading edge.

US 6 283 411 discloses a deicer comprising a skin heating means immediately subjacent an outer skin overlying an apex of a leading edge, and a skin deflection means immediately subjacent the outer skin chordwise aft of the apex. US 2008/170982 discloses a method of making nanofiber yarns.

### SUMMARY

A deicing assembly (for example, made by the method disclosed herein) includes a pneumatic deicing apparatus configured for attachment to a leading edge of an aircraft surface, the pneumatic deicing assembly (or apparatus) having a plurality of inflatable chambers, and a carbon allotrope heater having at least one sheet of a carbon allotrope material. The carbon allotrope heater includes, or comprises, a carbon allotrope sheet disposed along an inner surface of an inflatable chamber.

A method of making a deicing assembly (for example, the assembly described herein) includes forming a carbon allotrope heater from at least one sheet of a carbon allotrope material, and attaching the carbon allotrope heater to a pneumatic deicing apparatus, the pneumatic deicing apparatus having a plurality of inflatable chambers. The method includes attaching a carbon allotrope sheet to an inner surface of an inflatable chamber.

### BRIEF DESCRIPTION OF THE DRAWINGS

FIGS. 1A and 1B are cross-sectional views of a prior art pneumatic deicing apparatus.
FIG. 2 is a cross-sectional view of a deicing assembly.
FIG. 3 is an embodiment of the present deicing assembly.
FIG. 4 is an alternative embodiment of the present deicing assembly.
FIG. 5 is a perspective view of the deicing assembly.

### DETAILED DESCRIPTION

The disclosed deicing assembly includes a pneumatic deicing apparatus and a carbon nanotube (CNT) or other carbon allotrope-based heater. The pneumatic deicing apparatus or "boot" is located on a leading edge surface and includes inflatable chambers that, when inflated, loosen and break away accumulated snow and ice. The CNT heater provides additional deicing to the leading edge, and can be located adjacent to or within the pneumatic deicing boot. An adjacent configuration can be used for such conditions as Supercooled Large Droplets (SLD) to avoid icing behind the normal icing envelope, as shown for example, in Appendix C of 14 CFR Part 25.

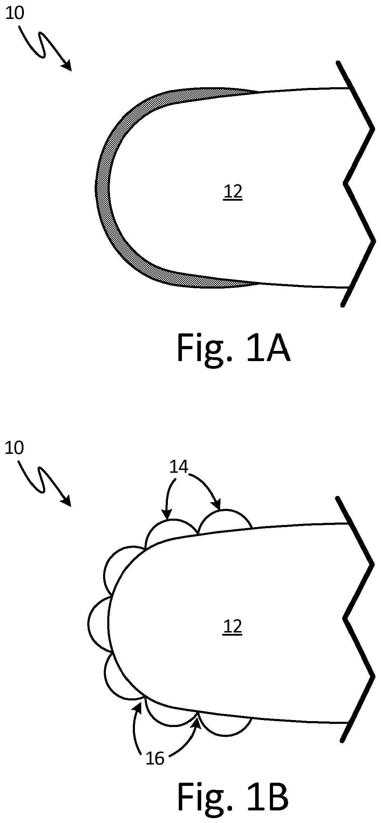

FIGS. 1A and 1B are cross-sectional views of a pneumatic deicing boot of the prior art. FIG. 1A shows deicing boot 10 in its uninflated state on an aircraft leading edge 12. FIG. 1B shows deicing boot 10 in its inflated state with a plurality of chambers 14. Even when deicing boot 10 is in its inflated state, snow and ice are likely to remain in regions 16 where the material of the chambers 14 undergoes less expansion.

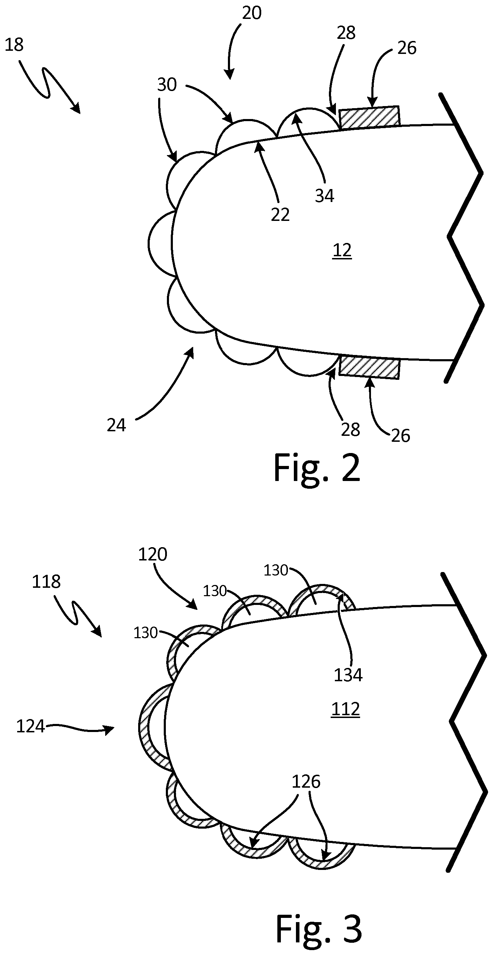

FIG. 2 is a cross-sectional view of deicing assembly 18 formed to aircraft leading edge 12. Leading edge 12 can be any aircraft leading edge surface, such as a wing, horizontal stabilizer, vertical fin, or strut, to name a few non-limiting examples. Deicing assembly 18 includes breeze side 20 and bond side 22. Breeze side 20 faces an external environment subject to icing conditions. Bond side 22 is attached to leading edge 12.

Deicing assembly 18 further includes pneumatic deicing boot 24 (shown in its inflated state) and carbon allotrope heater 26. Carbon allotrope heater 26 includes at least one sheet of a carbon allotrope material, such as carbon nanotubes (CNTs), which have a generally cylindrical structure. A CNT sheet can be formed from CNTs suspended in a matrix, a dry CNT fiber, or a CNT yarn, to name a few non-limiting examples. In other embodiments, the carbon allotrope material of carbon allotrope heater 26 includes graphene, graphene nanoribbons (GNRs), or other suitable carbon allotropes. Graphene has a two-dimensional honeycomb lattice structure, and GNRs are strips of graphene with ultra-thin widths.

In the aspect shown in FIG. 2, carbon allotrope heater 26 includes a sheet of carbon allotrope material in communication with edges 28 of deicing boot 24. Edges 28 are located away from the tip of leading edge 12.

Deicing boot 24 includes a plurality of inflatable chambers 30. Each having an inner surface 34. Deicing boot 24 is made from an elastomeric material, such as rubber or neoprene, which allows inflatable chambers 30 to stretch by as much as 100%. Inflatable chambers 30 extend in a span-wise direction along leading edge 12. In another arrangement, inflatable chambers 30 can extend in a chord-wise direction (not shown) along leading edge 12.

FIG. 3 shows an embodiment of deicing assembly 118 in which carbon allotrope heater 126 includes a plurality of carbon allotrope sheets imbedded within the plurality of inflatable chambers 130 of deicing boot 124. In the embodiment shown, at least one carbon allotrope sheet is imbedded in each of the plurality of inflatable chambers 130 on inner surfaces 134. In other embodiments, however, a plurality of carbon allotrope sheets can be imbedded in only one or in some of the inflatable chambers 130, based on the deicing needs at the leading edge 112.

In embodiments in which carbon allotrope heater 126 includes a plurality of carbon allotrope sheets imbedded within the inflatable chambers 130, the carbon allotrope sheets can be arranged such that, when the elongated inflatable chambers 130 are not inflated, the carbon allotrope sheets are close in proximity. In this state, the carbon allotrope heater 126 provides very concentrated heating to the surfaces of the breeze side 120 in contact with the carbon allotrope sheets. When the inflatable chambers 130 are inflated after the area has been heated, accumulated snow and ice are more easily removed. Carbon allotrope heater 126 has a large strain capability, and is thus compatible with the inflation of deicing boot 124 in the embodiment shown.

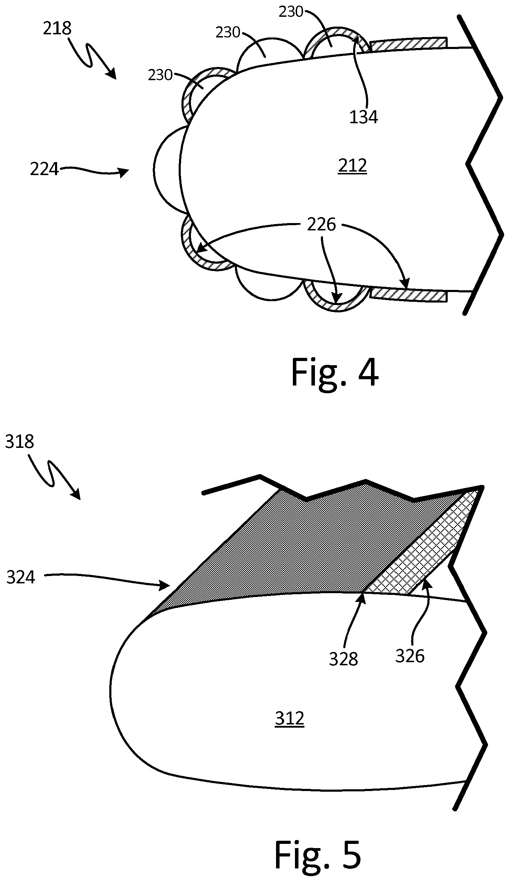

FIG. 4 shows an alternative embodiment of deicing assembly 218 which is a combination of the embodiments shown in FIGS. 2 and 3. Carbon allotrope heater 226 includes a plurality of carbon allotrope sheets imbedded within a number of inflatable chambers 230, and in communication with edges of deicing boot 224. Other embodiments can include carbon allotrope sheets embedded within each of the plurality of inflatable chambers, as well as in communication with edges.

FIG. 5 is a perspective view of deicing assembly 318, in which carbon allotrope heater 326 is in communication with an edge 328 of deicing boot 324 (shown in an uninflated state). In the embodiment shown, carbon allotrope heater 326 is a continuous sheet extending span-wise along leading edge 312. In other arrangements, however, carbon allotrope heater 326 can include a plurality of carbon allotrope sheets extending along leading edge 312. The plurality of carbon allotrope sheets can be either in communication with one another or spaced apart some distance from one another. Deicing assembly 318 can also have a chord-wise configuration.

Carbon allotrope heaters 26, 126, 226, and 326 are connected to a power source (not shown). The power source can provide direct current (DC) or alternating current (AC) depending on the type and size of the aircraft. The configuration of carbon allotrope heaters 26, 126, 226, and 326 are based, in part, upon the aircraft's power supply, as embodiments with more carbon allotrope sheets will typically require more power. The electrical resistivity of the material used in carbon allotrope heaters 26, 126, 226, and 326 can be modified so that it is compatible with the existing power source on a given aircraft. The electrical resistivity of carbon allotrope heaters 26, 126, 226, and 326 ranges from about 0.03 Ω/sq to about 3.0 Ω/sq based on the type of aircraft and the location and size of the leading edge 12, 112, 212, and 312. The varied resistivity of carbon allotropes is discussed in the following co-pending applications: U.S. Patent Application Ser. No. 15/368,271, "Method to Create Carbon Nanotube Heaters with Varying Resistance"; U.S. Patent Application Ser. No. 15/373,370, "Pressurized Reduction of CNT Resistivity"; U.S. Patent Application Ser. No. 15/373,363, "Adjusting CNT Resistance using Perforated CNT Sheets"; and U.S. Patent Application Ser. No. 15/373,371, "Reducing CNT Resistivity by Aligning CNT Particles in Films."

Carbon allotrope heaters 26, 126, 226, and 326 can be independently operable of deicing boots 24, 124, 224, and 324. The aircraft's operator may choose to run either the carbon allotrope heater or the deicing boot, or run both simultaneously based on factors such as weather, power supply, and power availability.

A method of making deicing assembly 18 includes forming a carbon allotrope heater 26 from at least one sheet of a carbon allotrope material and attaching carbon allotrope heater 26 to deicing boot 24. Carbon allotrope heater 26 is attached to deicing boot 24 by an adhesive material.

The disclosed deicing assembly has several benefits. The combination of mechanical and electro-thermal deicing provides robust deicing capabilities at the aircraft leading edge. Carbon allotropes are particularly well-suited to the assembly because they are easily conformable and can stretch with the elastomeric material of the deicing boot. Further, carbon allotrope heaters are lightweight and have a lighter thermal mass, making them very efficent at converting energy to heat. The carbon allotrope heaters may be carbon nanotubes, graphene and graphene nanoribbons, which are all sufficiently lighter than metals or alloys used in traditional heaters.

### Discussion of Possible Embodiments

The following are non-exclusive descriptions of possible embodiments of the present invention.

A deicing assembly (e.g. one made according to the methods herein described) includes a pneumatic deicing apparatus configured for attachment to a leading edge of an aircraft surface, the pneumatic deicing assembly (or apparatus) having a plurality of inflatable chambers; and a carbon allotrope heater having at least one sheet of a carbon allotrope material. The carbon allotrope heater includes, or comprises, the at least one carbon allotrope sheet disposed along an inner surface of an inflatable chamber.

The deicing assembly of the preceding paragraph can optionally include, additionally any one or more of the following features, configurations and/or additional components:
The pneumatic deicing apparatus is formed from an elastomeric material.

The carbon allotrope material is, or comprises, a carbon nanotube material.

The carbon nanotube material is, includes, or comprises, carbon nanotubes suspended in a matrix.

The carbon nanotube material is, or comprises, a dry carbon nanotube fiber.

The carbon nanotube material is, or comprises, a carbon nanotube yarn.

The carbon allotrope heater includes, or comprises, a carbon allotrope sheet in communication with an edge of the pneumatic deicing apparatus.

The carbon allotrope heater includes, or comprises, at least one carbon allotrope sheet embedded in each of the plurality of inflatable chambers on inner surfaces.

The carbon allotrope heater is configured to operate independently of the pneumatic icing apparatus.

A method of making a deicing assembly (e.g. an assembly as herein described) includes forming a carbon allotrope heater from at least one sheet of a carbon allotrope material and attaching the carbon allotrope heater to a pneumatic deicing apparatus, the pneumatic deicing apparatus having a plurality of inflatable chambers. The method includes attaching the at least one carbon allotrope sheet to an inner surface of an inflatable chamber.

The method of the preceding paragraph can optionally include, additionally any one or more of the following features, configurations and/or additional components:

The method includes forming the pneumatic deicing apparatus from an elastomeric material.

The method includes forming the carbon allotrope material from a carbon nanotube material.

The carbon nanotube material is, includes, or comprises, carbon nanotubes suspended in a matrix.

The carbon nanotube material is, includes, or comprises, a dry carbon nanotube fiber.

The carbon nanotube material is, includes, or comprises, a carbon nanotube yarn.

The method includes attaching a carbon allotrope sheet to an edge of the pneumatic deicing apparatus.

The method includes configuring the carbon allotrope heater to operate independently of the pneumatic deicing apparatus.

While the invention has been described with reference to an exemplary embodiment(s), it will be understood by those skilled in the art that various changes may be made without departing from the scope of the invention, which is defined by the claims.

In addition, many modifications may be made to adapt a particular situation or material to the teachings of the invention without departing from the scope, which is defined by the claims.

Therefore, it is intended that the invention not be limited to the particular embodiment(s) disclosed, but that the invention will include all embodiments falling within the scope of the appended claims.

## Claims

1. A deicing assembly (18, 118, 218, 318) comprising:
a pneumatic deicing apparatus configured for attachment to a leading edge (12, 112, 212, 312) of an aircraft surface, the pneumatic deicing apparatus comprising a plurality of inflatable chambers (30, 130, 230); and a heater;
**characterized in that** the heater is
a carbon allotrope heater (26, 126, 226, 326) comprising at least one sheet of a carbon allotrope material disposed along an inner surface (34, 134) of an inflatable chamber (30, 130, 230).

2. The assembly of claim 1, wherein the pneumatic deicing apparatus is formed from an elastomeric material.

3. The assembly of claim 1 or claim 2, wherein the carbon allotrope material is a carbon nanotube material, preferably wherein the carbon nanotube material comprises carbon nanotubes suspended in a matrix, a dry carbon nanotube fiber, and/or a carbon nanotube yarn.

4. The assembly of any preceding claim, wherein the carbon allotrope heater (26, 126, 226, 326) comprises a carbon allotrope sheet in communication with an edge (28, 328) of the pneumatic deicing apparatus.

5. The assembly of any preceding claim, wherein the carbon allotrope heater (26, 126, 226, 326) comprises at least one carbon allotrope sheet embedded in each of the plurality of inflatable chambers (30, 130, 230) on inner surfaces (34, 134).

6. The assembly of any preceding claim, wherein the carbon allotrope heater (26, 126, 226, 326) is configured to operate independently of the pneumatic deicing apparatus.

7. A method of making a deicing assembly (18, 118, 218, 318) comprising:
forming a carbon allotrope heater (26, 126, 226, 326) from at least one sheet of a carbon allotrope material; and
attaching the carbon allotrope heater (26, 126, 226, 326) to a pneumatic deicing apparatus, the pneumatic deicing apparatus comprising a plurality of inflatable chambers (30, 130, 230);
**characterized in that** the method further comprises attaching the at least one sheet of a carbon allotrope material to an inner surface (34, 134) of an inflatable chamber (30, 130, 230).

8. The method of claim 7 further comprising: forming the pneumatic deicing apparatus from an elastomeric material.

9. The method of claim 7 or claim 8 further comprising: forming the carbon allotrope material from a carbon nanotube material.

10. The method of claim 9, wherein the carbon nanotube material comprises carbon nanotubes suspended in a matrix, a dry carbon nanotube fiber, and/or a carbon nanotube yarn.

11. The method of any one of claims 7 - 10 further comprising: attaching a carbon allotrope sheet to an edge (28, 328) of the pneumatic deicing apparatus.

12. The method of any one of claims 7 - 11 further comprising: configuring the carbon allotrope heater (26, 126, 226, 326) to operate independently of the pneumatic deicing apparatus.

## Patentansprüche

1. Enteisungsbaugruppe (18, 118, 218, 318), die Folgendes umfasst:
eine pneumatische Enteisungsvorrichtung, die zur Befestigung an einer Vorderkante (12, 112, 212, 312) einer Luftfahrzeugfläche konfiguriert ist, wobei die pneumatische Enteisungsvorrichtung eine Vielzahl von aufblasbaren Kammern (30, 130, 230) umfasst; und
eine Heizung;
**dadurch gekennzeichnet, dass** die Heizung eine Kohlenstoffallotropheizung (26, 126, 226, 326) ist, die mindestens eine Bahn eines Kohlenstoffallotropmaterials umfasst, die entlang einer inneren Fläche (34, 134) einer aufblasbaren Kammer (30, 130, 230) angeordnet ist.

2. Baugruppe nach Anspruch 1, wobei die pneumatische Enteisungsvorrichtung aus einem Elastomermaterial gebildet ist.

3. Baugruppe nach Anspruch 1 oder Anspruch 2, wobei das Kohlenstoffallotropmaterial ein Kohlenstoffnanoröhrenmaterial ist, wobei das Kohlenstoffnanoröhrenmaterial vorzugsweise Kohlenstoffnanoröhren, die in einer Matrix suspendiert sind, eine trockene Kohlenstoffnanoröhrenfaser und/oder ein Kohlenstoffnanoröhrengarn umfasst.

4. Baugruppe nach einem der vorhergehenden Ansprüche, wobei die Kohlenstoffallotropheizung (26, 126, 226, 326) eine Kohlenstoffallotropbahn in Verbindung mit einer Kante (28, 238) der pneumatischen Enteisungsvorrichtung umfasst.

5. Baugruppe nach einem der vorhergehenden Ansprüche, wobei die Kohlenstoffallotropheizung (26, 126, 226, 326) mindestens eine Kohlenstoffallotropbahn umfasst, die in jeder der Vielzahl von aufblasbaren Kammern (30, 130, 230) an inneren Flächen (34, 134) eingebettet ist.

6. Baugruppe nach einem der vorhergehenden Ansprüche, wobei die Kohlenstoffallotropheizung (26, 126, 226, 326) dazu konfiguriert ist, unabhängig der pneumatischen Enteisungsvorrichtung zu arbeiten.

7. Verfahren zum Herstellen einer Enteisungsbaugruppe (18, 118, 218, 318), das Folgendes umfasst:
Bilden einer Kohlenstoffallotropheizung (26, 126, 226, 326) aus mindestens einer Bahn eines Kohlenstoffallotropmaterials; und
Befestigen der Kohlenstoffallotropheizung (26, 126, 226, 326) an einer pneumatischen Enteisungsvorrichtung, wobei die pneumatische Enteisungsvorrichtung eine Vielzahl von aufblasbaren Kammern (30, 130, 230) umfasst;
**dadurch gekennzeichnet, dass** das Verfahren ferner Befestigen der mindestens einen Bahn eines Kohlenstoffallotropmaterials an einer inneren Fläche (34, 134) einer aufblasbaren Kammer (30, 130, 230) umfasst.

8. Verfahren nach Anspruch 7, das ferner Folgendes umfasst: Bilden der pneumatischen Enteisungsvorrichtung aus einem Elastomermaterial.

9. Verfahren nach Anspruch 7 oder Anspruch 8, das ferner Folgendes umfasst: Bilden des Kohlenstoffallotropmaterials aus einem Kohlenstoffnanoröhrenmaterial.

10. Verfahren nach Anspruch 9, wobei das Kohlenstoffnanoröhrenmaterial Kohlenstoffnanoröhren, die in einer Matrix suspendiert sind, eine trockene Kohlenstoffnanoröhrenfaser und/oder ein Kohlenstoffnanoröhrengarn umfasst.

11. Verfahren nach einem der Ansprüche 7-10, das ferner Folgendes umfasst: Befestigen einer Kohlenstoffallotropbahn (28, 328) an der pneumatischen Enteisungsvorrichtung.

12. Verfahren nach einem der Ansprüche 7-11, das ferner Folgendes umfasst: Konfigurieren der Kohlenstoffallotropheizung (26, 126, 226, 326) dazu, unabhängig von der pneumatischen Enteisungsvorrichtung zu arbeiten.

## Revendications

1. Ensemble de dégivrage (18, 118, 218, 318) comprenant :
un appareil de dégivrage pneumatique conçu pour être fixé à un bord d'attaque (12, 112, 212, 312) d'une surface d'aéronef, l'appareil de dégivrage pneumatique comprenant une pluralité de chambres gonflables (30, 130, 230) ; et
un appareil de chauffage ;
**caractérisé en ce que** l'appareil de chauffage est un appareil de chauffage de carbone allotrope (26, 126, 226, 326) comprenant au moins une feuille d'un matériau de carbone allotrope, disposée le long d'une surface intérieure (34, 134) d'une chambre gonflable (30, 130, 230).

2. Ensemble selon la revendication 1, dans lequel l'appareil de dégivrage pneumatique est formé d'un matériau élastomère.

3. Ensemble selon la revendication 1 ou la revendication 2, dans lequel le matériau de carbone allotrope est un matériau de nanotube de carbone, de préférence dans lequel le matériau de nanotube de carbone comprend des nanotubes de carbone suspendus dans une matrice, une fibre de nanotubes de carbone sèche et/ou un fil de nanotube de carbone.

4. Ensemble selon une quelconque revendication précédente, dans lequel l'appareil de chauffage de carbone allotrope (26, 126, 226, 326) comprend une feuille de carbone allotrope en communication avec un bord (28, 328) de l'appareil de dégivrage pneumatique.

5. Ensemble selon une quelconque revendication précédente, dans lequel l'appareil de chauffage de carbone allotrope (26, 126, 226, 326) comprend au moins une feuille de carbone allotrope noyée dans chacune de la pluralité de chambres gonflables (30, 130, 230) sur les surfaces intérieures (34, 134) .

6. Ensemble selon une quelconque revendication précédente, dans lequel l'appareil de chauffage de carbone allotrope (26, 126, 226, 326) est conçu pour fonctionner indépendamment de l'appareil de dégivrage pneumatique.

7. Procédé de fabrication d'un ensemble de dégivrage (18, 118, 218, 318) comprenant :
la formation d'un appareil de chauffage de carbone allotrope (26, 126, 226, 326) à partir d'au moins une feuille d'un matériau de carbone allotrope ; et
la fixation de l'appareil de chauffage de carbone allotrope (26, 126, 226, 326) à un appareil de dégivrage pneumatique, l'appareil de dégivrage pneumatique comprenant une pluralité de chambres gonflables (30, 130, 230) ;
**caractérisé en ce que** le procédé comprend en outre la fixation de l'au moins une feuille d'un matériau de carbone allotrope à une surface interne (34, 134) d'une chambre gonflable (30, 130, 230).

8. Procédé selon la revendication 7, comprenant en outre : la formation de l'appareil de dégivrage pneumatique à partir d'un matériau élastomère.

9. Procédé selon la revendication 7 ou la revendication 8, comprenant en outre : la formation du matériau de carbone allotrope à partir d'un matériau de nanotube de carbone.

10. Procédé selon la revendication 9, dans lequel le matériau de nanotube de carbone comprend des nanotubes de carbone suspendus dans une matrice, une fibre de nanotubes de carbone sèche et/ou un fil de nanotube de carbone.

11. Procédé selon l'une quelconque des revendications 7 à 10, comprenant en outre : la fixation d'une feuille de carbone allotrope à un bord (28, 328) de l'appareil de dégivrage pneumatique.

12. Procédé selon l'une quelconque des revendications 7 à 11, comprenant en outre : la configuration de l'appareil de chauffage de carbone allotrope (26, 126, 226, 326) pour qu'il fonctionne indépendamment de l'appareil de dégivrage pneumatique.
